Europäisches Patentamt

**European Patent Office**

**Office européen des brevets**

(11) Publication number: **0 145 045**
**A2**

(12) **EUROPEAN PATENT APPLICATION**

(21) Application number: **84201487.0**

(22) Date of filing: **15.10.84**

(51) Int. Cl.⁴: **G 03 B 27/62**
**G 03 G 15/00**

(30) Priority: **14.10.83 US 542289**

(43) Date of publication of application:
**19.06.85 Bulletin 85/25**

(84) Designated Contracting States:
**AT BE CH DE FR GB IT LI LU NL SE**

(71) Applicant: Gradco Systems, Inc.
3421 West Segerstrom
Santa Ana Caliofornia 92704(US)

(72) Inventor: Hamma, John C.
23 Sunnyside Court
Milford, Connecticut 06460(US)

(74) Representative: Busse & Busse Patentanwälte
Postfach 1226 Grosshandelsring 6
D-4500 Osnabrück(DE)

(54) **Semi automatic document feeder.**

(57) A document feeder is applied to an office copier and includes a base constituting a replacement for the usual platin cover. The base has three sets of sheet engaging rolls spaced along the base to engage a sheet inserted into the housing covering the base to feed the sheet to a position registered for reproduction. Sheets are registered on the platen glass by fingers which are lifted to allow the sheets to be fed from the platen glass. The fingers ride on the successive sheets to automatically intercept the next sheet. The registration fingers are in an assembly mounted on the copier to enable registration of originals when the cover is elevated.

## BACKROUND OF THE INVENTION

Office copying machines, in general, have a hinged platen cover, overlying the glass of the platen onto which the original documents are placed for reproduction by the copier. Such platen covers in some instances constitute original documen feeders which enable an operator to place sequential originals in the feeder, without raising the platen cover, and the feeder delivers the document to a position on the glass for reproductio Thereafter, the original document is automatically removed and transferred to a stack and a further original can be fed to the reproduction position on the glass.

Such feeders are complex and bulky structures and have not, in general, been applied to copying machines of the type wherein the platen moves relative to the optical system of the copier. However, efforts have been made to provide a document feeder for the moving platen type copiers.

**- 2 -**     <u>SUMMARY OF THE INVENTION</u>

The present invention has as an objective the provision of a novel semi-automatic document feeder applicable to moving platen copying machines, but also useful on fixed platen copiers, which enables an operator to sequentially supply original documents to the sheet feeder and which carries each sheet to the proper position on the platen glass for reproduction and thereafter discharges the original by turning it over and moving it to the top of the platen cover.

More particularly the feeder is incorporated in a cover for the platen and has three shafts having sheet engaging feed rolls to move a sheet to proper copying position and then displace the sheet to a receiver after a required number of copies has been produced.

The rolls are located on the shaft so as to interact with sheets of various sizes, say from small 5 1/2" x 8 1/2" sheets to larger letter or legal sizes fed in a variety of manners to the copier glass. For example, certain copiers to which this invention may be applied require that letter size sheets be placed on a registration line at the short side of the sheet, while other copiers require registration at the long side of the sheet. The spacing of the rolls nearest the registration is accomplished uniformly for the various sizes of sheets. Certain of the feed rolls are self-adjusting for uniform contact with the sheets on the platen glass.

The mechanical registration means of the invention includes an assembly which is mounted upon the copier, while the sheet transporting means are incorporated in the platen cover. Actuator means for the registration means are also incorporated in the cover.

The registration means includes a number of fingers mounted on a shaft in transversely spaced relation across the platen glass and adapted to rest thereon by gravity. The lower ends of the fingers have tips which confront the leading edge of an on-coming sheet to arrest movement of the sheet. The actuator means operates to monentarily rock the fingers upwardly to allow movement of the sheet beneath the finger tips. The tips then ride on the sheet as it continues to be fed towards discharge and inversion feed rolls. Thus, engagement of the fingers with the leading edge of the next oncoming sheet is assured, notwithstanding the space between sheets.

The present feeder also has a novel device for guiding sheets of different sizes to the feed rolls. The guide device is in the form of a plate inclined to facilitate movement of sheets into the feeder and having a second plate pivotally mounted thereon and having transversely spaced guide flanges of different heights on one surface to align therebetween sheets of different widths as the sheets are manually supplied to the feeder. The other side of the hinged plate has guide flanges spaced to guide sheets of another width.

This invention possesses many other advantages and has other purposes which may be made more clearly apparent from a consideration of the forms in which it may be embodied. The preferred form is shown in the drawings accompanying and forming part of the present application. It will now be described in detail, for the purpose of illustrating the general principals of the invention; but it is to be understood that such detailed description is not to be taken in a limiting sense.

## BRIEF DESCRIPTION OF THE DRAWINGS

Fig. 1 is a fragmentary elevation showing a document feeder applied to a copying machine;

Fig. 2 is an enlarged horizontal section on the line 2-2 of Fig. 1;

Fig. 3 is a vertical section on the line 3-3 of Fig. 2;

Fig. 4 is an enlarged fragmentary detail view showing a self-adjusting feed roll assembly;

Fig. 5 is a section on the line 5-5 of Fig. 4;

Fig. 6 is an enlarged vertical section on the line 6-6 of Fig. 2;

Fig. 7 is an enlarged detail view as taken on the line 7-7 of Fig. 2;

Fig. 8 is an enlarged side elevation of the infeed guide in condition for feeding sheets of certain size;

Fig. 9 is a view showing the infeed guide in condition to feed sheets of certain other size;

Fig. 10 is a transverse section on the line 10-10 of Fig. 8;

Fig. 11 is a top plan of the guide structure.

## DESCRIPTION OF THE PREFERRED EMBODIMENT

0145045

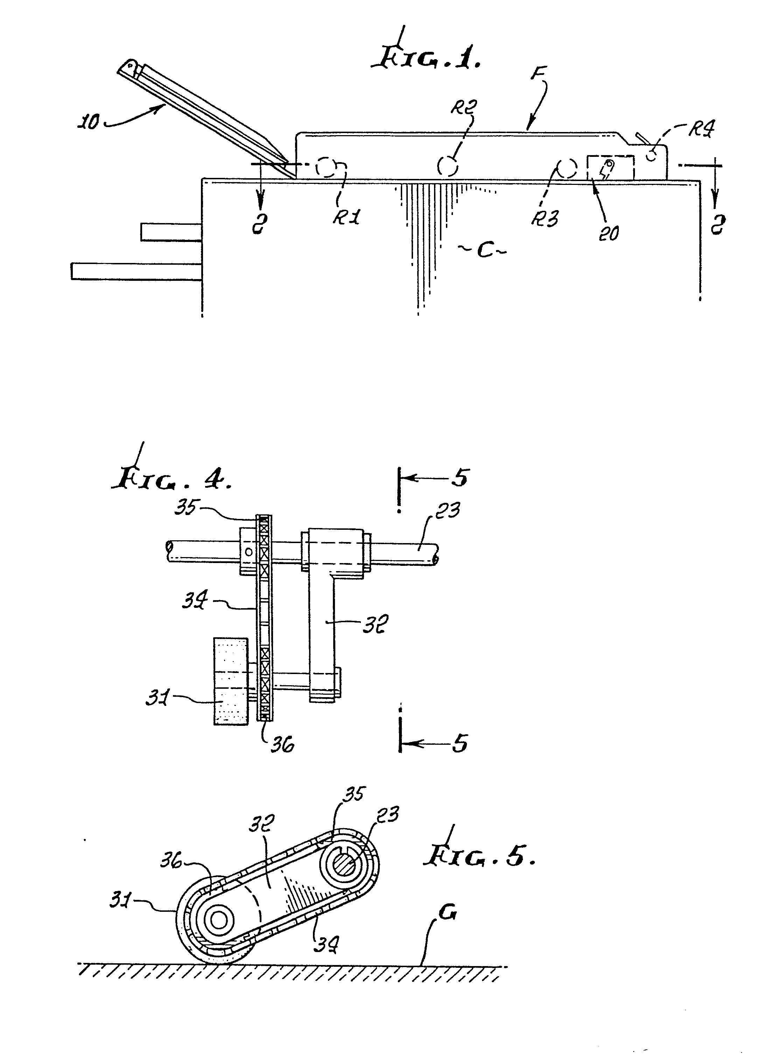

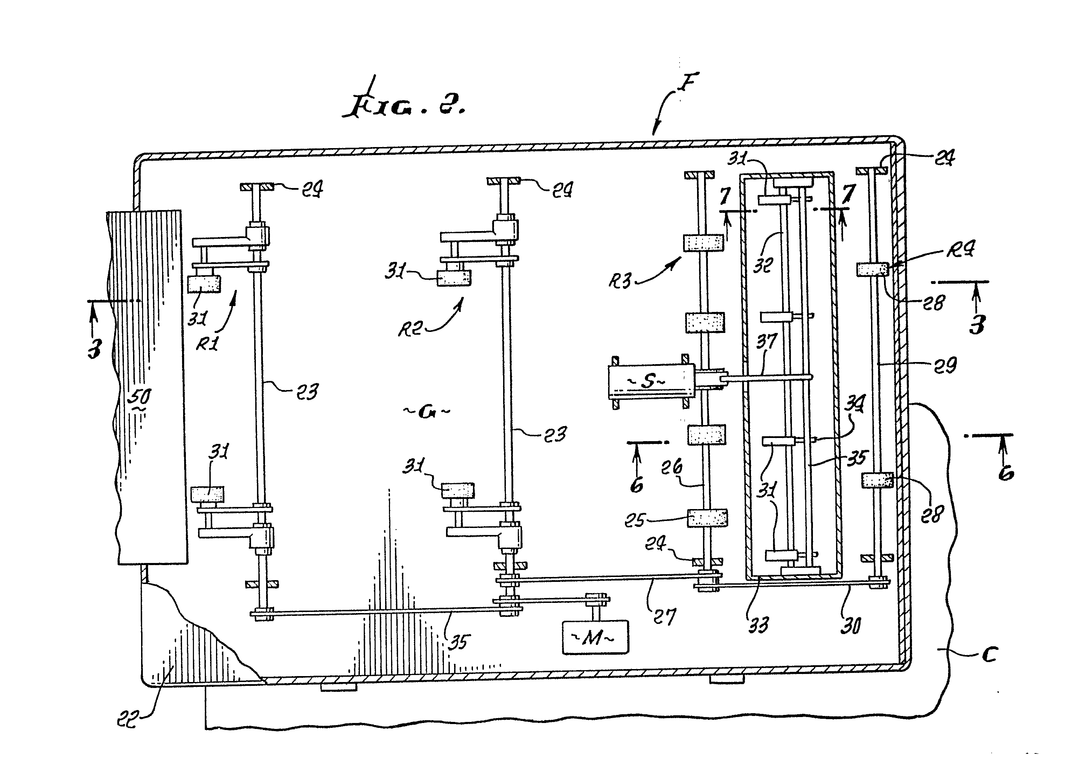

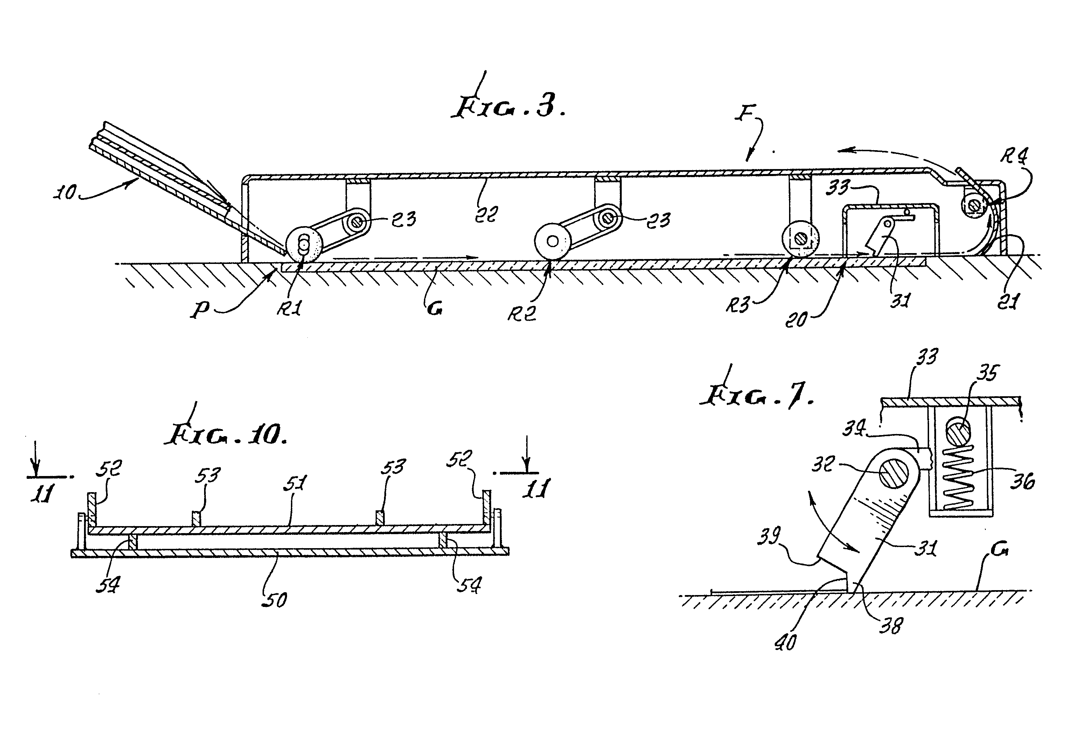

As seen in the drawings, a semi-automatic document feeder F, "SADF", is applied to a copier C and constitutes a cover for the platen P having a glass G onto which original documents are placed for copying. As shown by the arrows in Fig. 3, sheets are supplied to the feeder through an input guide 10 and transported by feed rolls Rl and R2 to a registration means 20, at which one or more copies of the original are made by the copier, and then the sheet is fed by rolls R3 and R4 from beneath the platen through an inverter 21 to be deposited on top of the platen cover.

More specifically, as seen in Fig. 2, the feed rolls Rl and R2 are mounted on a base plate 22 on shafts 23 supported in suitable bearing blocks 24. Shafts 24 are rotatable by a single drive motor M and a pulley and belt drive 25. The paper feed rolls R3 in the form shown, also includes rolls 25 on a shaft 26 supported on the bearing blocks 24, and driven by the R2 roll shaft by a belt drive 27.

Output rolls R4 included feed rolls 28 on a shaft 29 also supported in suitable bearing blocks 24 on the base plate 22. A belt drive 30 drives shaft 29 off of shaft 26. Thus, all of the feed roll shafts are driven by the single motor M.

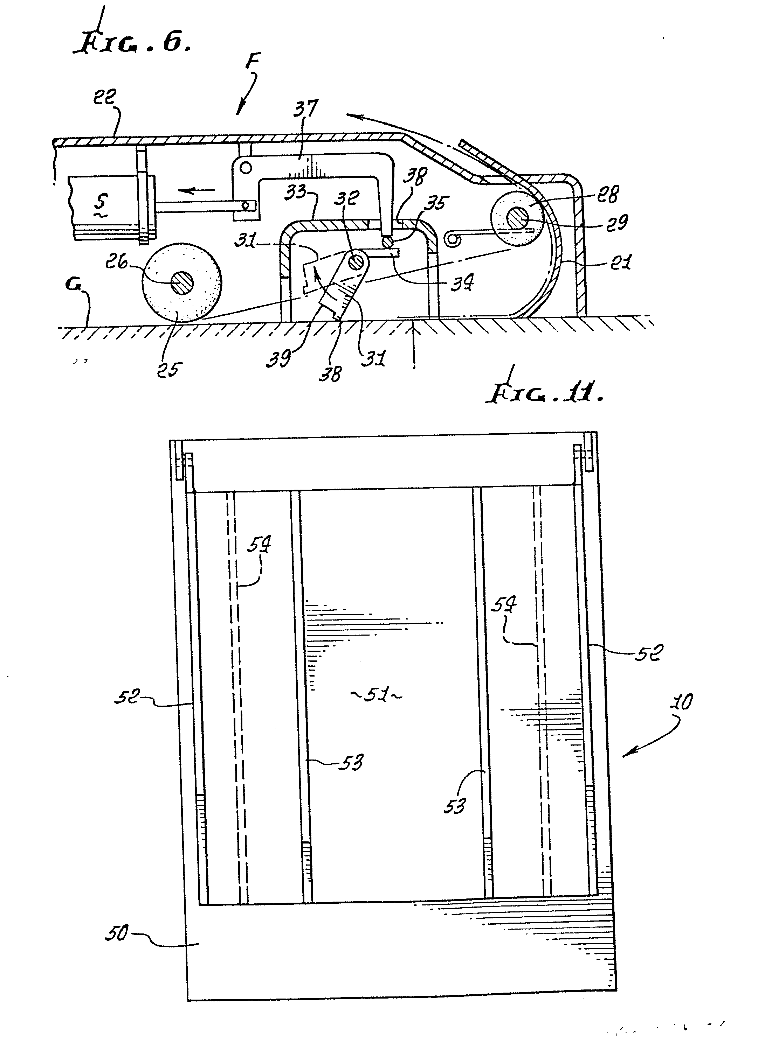

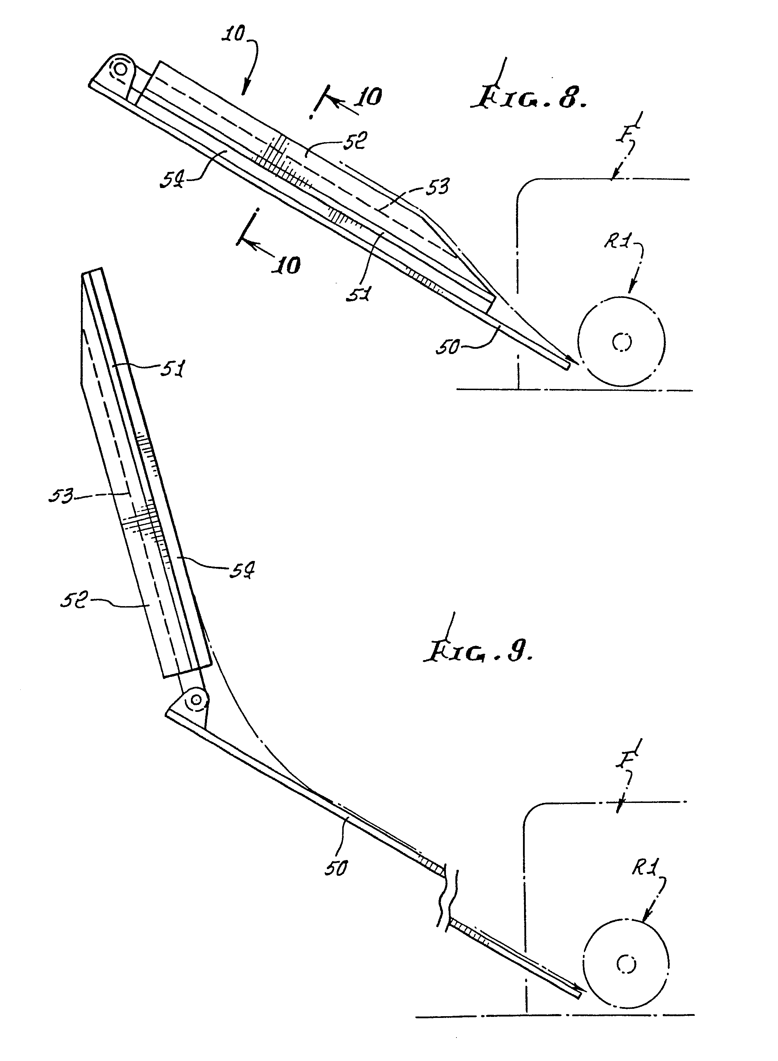

Referring to Fig. 4 and 5, a representative roll unit Rl or R2 is shown. The structure enables the friction roller 31 of each roll unit Rl and R2 to be self-adjusting in the sense that each roller 31 gravitates toward the platen glass G to frictionally engage the paper sheets. Each unit includes a support arm 32 pivotally mounted on the shaft 23. The free end of the arm 32 has an axle on which the roller 31 is mounted. A drive chain 34 and sprockets 35 and 36 on the shaft and axle drive the roller 31.

Roll sets Rl and R2 are operable to move sheets to the registration of the sheets on the glass G is accomplished by movement of the sheets by rollers 25 against a plurality of laterally spaced stop fingers 31. These fingers are pivotally mounted on a shaft 32 supported in a housing 33 which is mounted on the copier in a proper position to cause the fingers to normally rest on the platen glass to arrest movement of a sheet. Each finger 31 has a lever 34 projecting these from and engageable by an actuator bar 35 mounted at its opposite ends for vertical movement, as seen in Fig. 7. Springs 36 normally hold the bar 35 in a position allowing the fingers 31 to rest on the platen glass.

Means are provided to force the actuator bar downwardly to lift the fingers from the platen glass. As seen in Fig.'s 2 and 6, a solenoid S is mounted on the top of the platen cover and has its armature connected to one end of a lever 37, the other end of the lever extending through an opening 38 in the finger housing 33. When the solenoid is energized, the lever 37 acts downwardly on bar 35 causing the fingers to be lifted from the platen glass.

Since the finger housing is mounted on the copier, when the platen cover is raised to permit manual placement of a document on the glass, the fingers are in place to act as a registration stop. Each finger, as best seen in Fig. 7, 31 has a tip 38 which extends downwardly from a relative to a vertical stop surface 40 so that if an oncoming sheet tends to be curled upward the leading edge will be deflected downwardly to the stop surface 40. As best seen in Feg. 2, the rollers 25 are spaced on the shaft 26 relative to the stop fingers 31 that various sizes of sheets will be properly registered and the sheets are finally driven against the stop fingers in such a manner that a sheet cannot stop in a skewed condition. The spacing of the rollers

ist preferrably such that the adjacent inboard rollers act on small size sheets which are spanned by the outboard rollers. As sheets are fed past the fingers 31, after deenergization of the solenoid S, the fingers rest on the moving sheet, so that when a trailing edge passes from beneath the fingers, the tips 38 are immediately in contact with the glass to register the oncoming sheet, regardless of the space between sheets.

The leading edge of a sheet is picked up by the onput roller set R4 while still engaged by the registration rolls R3. In order to rapidly move the sheet from beneath the registration fingers the rolls 28 are of smaller diameter with greater peripheral speed than rolls 25 and/or the belt drive 30 increases the speed of shaft 29 as compared with shaft 26. The fingers 31 can freely pivot upwardly, as seen in broken lines in Fig. 6, allowing the momentary tensioning of the sheet when it is initially picked up by rolls 28.

It will be understood, without need for illustration, that suitable control circuitry for the drive motor and solenoid are provided, including sheet and copier scan detectors to start and stop the motor and to momentarily energize the solenoid.

The infeed guide 10 includes a base plate mounted on an incline with its lower end adjacent to the roll set R1. Pivotally mounted at the upper end of base plate 50 is an upper guide plate 51 movable between the position shown in Fig. 's 8 and 11 and the position shown in Fig. 9. As seen in Fig. 's 8 and 11, the upper surface of plate 51 has a first pair of relatively high guide ribs on flanges 52, 52 at its side edges adapted to receive therebetween a sheet of one width to direct the sheet in alignment towards the feed rolls R1. Between ribs 52 is another pair of shorter guide ribs or flanges 53, 53 adapted to receive narrower sheet therebetween and guide it to feed rolls R1. Wider sheets, between ribs 52 ride upon the upper ————————————————————

surfaces of ribs 53.  On the other side of plate 51 opposite ribs 52 and 53 is a third pair of ribs 54, 54 spaced apart a distance to receive a sheet of still a different width when plate 51 is pivoted to the positions of Fig. 11.

Such a guide structure is a simple one which avoids the use of adjustable guide ribs and consequent complicated structures.

0145045

1. An SADF for copier machines comprising: a platen cover adapted to be pivotally mounted on the copier, sheet feeding means in said platen cover operable to feed sheets across the copier glass to a position for copying, and means for registering the sheets successively at said position, said means for registering the sheets comprising a plurality of fingers spaced laterally, means pivotally mounting said fingers for gravitational movement into engagement with the copier glass with the fingers on an incline in the direction of sheet movement and actuator means to pivot said finger out of contact with the copier glass.

2. An SADF as defined in Claim 1, wherein said registration means and said platen cover are separate assemblies applicable to the copier to enable raising of the platen cover while said registration means remains in place on the copier glass.

3. An SADF as defined in Claim 1, wherein said means operable to feed sheets across the copier glass includes a set of rollers adjacent to said fingers, a shaft for said rollers, said rollers comprising a first pair of closely spaced inboard rollers and a second pair of widely spaced outboard rollers.

4. An SADF as defined in Claim 1, including inverter means to receiver sheets fed past said fingers and depositing the sheets on the top of said platen cover.

5. An SADF as defined in Claim 1, wherein said means operable to feed sheets across the copier glass includes sets of rollers spaced along said platen cover, rotary shafts for said sets of rollers, each set including a pair of rollers, means mounting said rollers for gravitational movement relative to said shafts not engagement with the copier glass, drive means for said shafts, and drive means for driving each roller upon rotation of said shafts.

6. Sheet guiding means for document feeders on copying machines: including a base guide plate adapted to be mounted at the inlet of the feeder, a second plate mounted on skid base plate for movement relative thereto to form an extension thereof, one of said plates having two pairs of elongated guide flanges, the respective pair being of different height and laterally spaced to receive sheets of different widths therebetween, and one of said plates having a third pair of guide flanges spaced apart differently the two pairs to receive sheets of a third width therebetween.

7. Sheet guiding means as defined in Claim 6 wherein all of said pairs of guide flanges are on said second plate and said second plate is pivoted on said base plate.

FIG.1.

FIG.4.

FIG.5.

FIG. 2.

FIG.3.

FIG.10.

FIG.7.

0145045

FIG.6.

FIG.11.

FIG.8.

FIG.9.